# EUROPEAN PATENT APPLICATION

(11) **EP 0 550 379 A1**
(43) Date of publication of application: **07.07.1993**
(21) Application number: 92610085.0
(22) Date of filing: 02.12.1992
(51) Int. Cl.: A22B 5/00, A22C 17/00

(54) **Method, apparatus and combined device for loosening the ribs in a piece of meat**

(30) Priority: 03.12.1991 DK 1953/91
(71) Applicant: Slagteriernes Forskningsinstitut, DK-4000 Roskilde (DK)
(72) Inventor: Sasserod, Michael, DK-2000 Frederiksberg (DK); Moller, Helge, DK-2920 Charlottenlund (DK); Post, Erling, DK-4000 Roskilde (DK)
(74) Representative: Jessen, Ivar Bergishagen

(57) **Abstract**

According to the method the ribs (2) in a piece of meat (1) are loosened in that two adjacent areas of the membrane of the bone offset in relation to each other in the longitudinal direction of a bone (2) are pressed towards the bone and displaced in relation to each other transversely to the bone, thereby breaking the membrane, and that the latter operation is effected successively along part of the bone. The bones may be loosened further, in particular with the view of a subsequent mechanical extraction in that the piece of meat (1) is being clamped and the bones (2) supported at their membrane side while being supported at the opposite side via the meat in such a manner that the bone portion of the piece of meat is by and large kept in the same plane as the meat portion beyond the bones, while the meat in the area at the free ends (3) of the bones at the same time is pressed away from the bones in the direction in towards the piece of meat and away from the membrane side.

## Description

The invention relates to a method of loosening the ribs in a piece of meat. The invention also relates to apparatuses for use in carrying out the method and a combination of such apparatuses.

The International Published Patent Specification No. WO91/03163 describes a method and a device the purpose of which is to loosen the bones in a belly piece so much from the membranes which retain them to the meat that they can be extracted at following stations. In this prior method the piece of meat is at first clamped in a holder so that the bones become slightly inclined in relation to the plane of the conveyor. The piece of meat is then passed towards a row of fingers, not described in detail, which fingers scrape the membrane on the upper side of the bones. It is also described that upstream of the scraping station there may be provided a set of knives controlled such that the membrane is cut longitudinally of the bones. The portion of the meat containing the bones is then swung up at an angle of 90° with the plane of the conveyor, following which the holder with the piece of meat passes a rod with downwards pointing rubber fingers intended to press in between the free ends of the ribs, thereby pressing the meat away from the bones. In an immediately following station the piece of meat is being passed beneath an arrangement of spring steel teeth at which a still more intensive presssing-away of the meat is to be effected. From here the piece of meat is being passed on to a station at which the loosened bones are extracted.

In the known device the fingers or the scrapers merely sweep over the bones in their longitudinal direction which per se is insufficient to break the membrane, and it has therefore been necessary to cut the membrane by means of a set of knives, thereby rendering the method and apparatus difficult and more expensive.

In the prior art method the piece of meat is further severely deformed when it is being bent at an angle of 90°. Owing to the manner of fastening and the strong forces required to expose the ends of the ribs there is a risk that the meat underneath the ribs is separated as a single piece leaving the meat between the ribs behind, which in practice results in difficulties, because such pieces of meat have to be discarded and used in a less profitable production.

DK Patent No. 159 899 describes a an apparatus for extracting the bones from a belly piece. It has been found that the apparatus operates more reliably if the piece of meat prior to being processed has been scraped with a knife on the outer side of the bones and the free ends of the bones have been loosened from the underlying meat by pressing away the meat between the ribs in the area at the free ends of the bones. In this case it is not necessary to free the bones in their full length, as is substantially done according to WO91/03163.

It is the object of the invention to provide a method of the above mentioned type with a view to extracting the bones later on in an apparatus, e.g. of the type described in the above Danish patent.

The method according to the invention differs from the prior art method in that two adjacent areas of the membrane of the bone offset in relation to each other in the longitudinally direction of a bone are pressed towards the bone and displaced in relation to each other transversely to the bone, thereby breaking the membrane, and that the latter operation is carried out successively along part of the bone.

It has turned out that the referenced form of scraping is suffcient to break the membrane beneath the ribs to such an extent that the ribs may subsequently be extracted. The method further presents the advantage that it allows to make use of a scraping means which does not need to be exactly positioned in relation to each individual bone as is the case with the fingers and knives of the prior art apparatus.

In a preferred embodiment a still more effective breaking of the membrane is obtained in that both of the adjacent areas offset in relation to the longitudinal direction of the bone are displaced in relation to the bone in the transverse direction of the bone, and the loosening of the ribs may further be made easier in that the operation is carried out along substantially the entire bone, preferably in the direction towards a free bone end.

A method of loosening the ribs in a piece of meat is characterized in that the piece of meat is being clamped and the bones supported at their membrane side, while being supported at the opposite side via the meat in such a manner that the bone portion of the piece of meat is by and large kept in the same plane as the meat portion beyond the bones, while the meat in the area at the free ends of the bones at the same time is pressed away from the bones in the direction in towards the piece of meat, and away from the membrane side of the bones. The severe deformation of the piece of meat known from WO91/03163 is thus avoided and since merely the portion around the free ends of the bones is exposed according to the invention, the deformation of the piece of meat is limited and also the risk that the meat between the bones is not carried along with the major piece of meat when extracting the bones. All in all the method according to the invention allows the piece of meat to be processed considerably more gently than according to the prior art method.

After the ribs have been scraped either manually or mechanically they may be further loosened by the method just described prior to being extracted in a machine, as described in the above mentioned DK patent No. 159 899, or in a similar machine.

The invention also relates to an apparatus for looseing the ribs in a piece of meat, comprising scraping means disposed above the plane of the piece of meat for scraping the membrane side of the bones in the longitudinal direction of the bones, a holder for the piece of meat and a conveyor for advancing the piece of meat, said apparatus being characterized in that the scraping means comprise two mutually parallel, elongated scraping members, where at least one scraping member is displaceable in its longitudinal direction and displaceable in relation to the second scraping member, that a support is provided in connection with the scraping means, the scraping means and the support being movable in the direction towards each other, and that the holder comprises an abutment and a clamping member movable in relation thereto.

In a preferred embodiment both of the scraping members may be displaceable in their longitudinal direction and the scraping members may be rods with scraping faces provided with incisions. The incisions may be shaped as blunt, symmetrical teeth or the scraping rods may for instance consist of round bars with a coarse thread. These different forms of teeth contribute to a better grip in the membrane over the bones and may be varied according to the size and type of the pieces of meat to be processed.

The apparatus is in a second embodiment characterized in that the conveyor is a conveyor belt composed of a number of mutually separated bands, that the support comprises a movable beam carrying several rods and extending transversely to the conveyor belt, each rod carrying a support roller at the free end, and that the clamping member comprises a second movable beam extending transversely to the conveyor belt and carrying several rods each of which at the free end is provided with an abutment plate.

The invention further relates to an apparatus for loosening the ribs in a piece of meat, said apparatus being characterized in that it comprises a conveyor for advancing the piece of meat, a holder for the piece of meat having a member with a substantially plane surface for abutment against the membrane side of the bone, several supporting means for abutment on the meat side opposite the bones, and several pressing members rotatable about a common axis.

An embodiment of the apparatus is characterized in that the conveyor is a conveyor belt composed of several mutually separated, parallel bands, that the member for abutment on the membrane side of the bones is a fixed rail, that each supporting member comprises a surface located in a gap between two bands and supported at the end of a rod whose other end is secured on a beam extending transversely to the conveyor belt and movable against it, and that the pressing members are substantially circular discs disposed on a common rotatable shaft. By moving the pressing faces of the pressing members in a combined translatory and rotating movement it is intended that they to some extent "roll" across the surface of the meat without scraping or cutting into the meat, thereby contributing to the gentle processing aimed at with the invention.

The invention further relates to a combined device for loosening the ribs in a piece of meat, comprising scraping means positioned above the plane of the piece of meat for scraping the membrane side of the bones in the longitudinal direction of the bones, a holder for the piece of meat and a conveyor for advancing the piece of meat, said device being characterized in that the scraping means comprise two mutually parallel, elongated scraping members, where at least one scraping member is displaceable in its longitudinal direction and is displaceable in relation to the second scraping member, that a support is provided in connection with the scraping members, where the scraping members and the support are movable in the direction towards each other, that the holder includes an abutment and a clamping means movable in relation thereto, and that there is a second conveyor for advancing the piece of meat, a holder for the piece of meat comprising a means with a substantially plane surface for abutment on the membrane side of the bones, a number of supporting means for abutment on the meat side opposite the bones, and several pressing members rotatable about a common axis.

Alternative embodiments of the combined device according to the invention are stated in claims 13 and 14.

The invention will now be described in detail with reference to some embodiments and with reference to the drawings, in which
Fig. 1 is a perspective view of a scraping apparatus according to the invention,
Fig. 2 is a schematical side view of the apparatus in Fig. 1,
Fig. 3 is a perspective view of a pressing apparatus according to the invention,
Fig. 4 is a partial section of the apparatus in Fig. 3,
Fig. 5 is a plan view of a combined device for scraping and pressing comprising a rotary table with a scraping station and a pressing station,
Fig. 6 is a perspective view of a scraping station,
Fig. 7 is a radial section of the rotary table with scraping station,
Fig. 8 is a perspective view of a pressing station,
Fig. 9 is a radial section of the rotary table with pressing station,
Fig. 10 is a perspective view of a second embodiment of a pressing station,
Fig. 11 is a radial section of the rotary table and the pressing station in Fig. 10,
Fig. 12 is a partial section of the pressing disc in Fig. 11 along the line XII-XII, and
Fig. 13 is a partial section of the pressing disc in Fig. 11 along the line XIII-XIII.

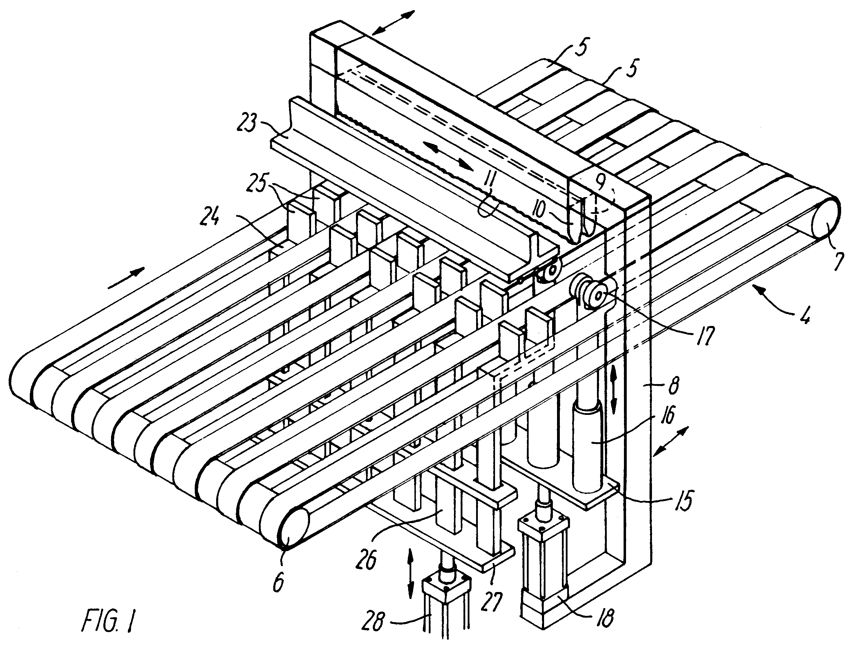

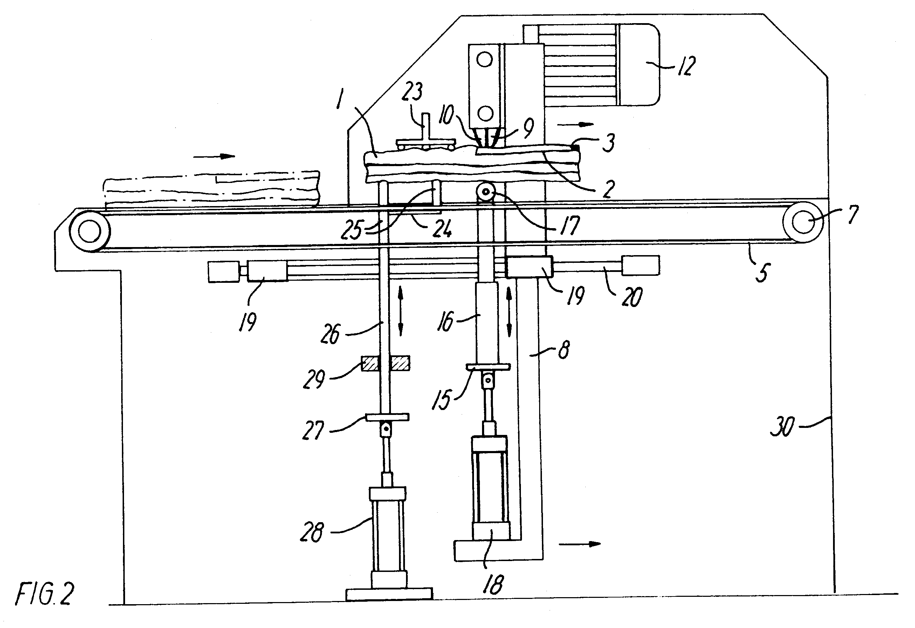

The scraping apparatus in Figs 1 and 2 comprises a conveyor belt 4 consisting of two drums 6 and 7, around which a number of mutually parallel bands 5 extends. A frame 8 carries two scraping rods 9 and 10 provided with incisions 11 on their scraping face. The scraping rods may, as shown by arrows, reciprocate transversely to the conveyor belt 4. The scraping rods are moved by means of a crankshaft mechanism driven by an electromotor 12. A support for the piece of meat is positioned beneath the scraping rods and consists of a beam 15 carrying telescopic, resilient rods 16 having at their top a supporting roller 17. The beam 15 and thus the supporting rollers 17 may by means of working cylinders 18 be pushed up towards the scraping rods. The working cylinders 18 are mounted on the frame 8 and, as it will best appear from Fig. 2, the frame is suspended on a rail 20 by means of bushings 19 in such a manner that it may be displaced along the direction of the conveyor belt e.g. by chain drive or by means of another working cylinder. A firm abutment member 23 is mounted parallel to the scraping rods and beneath the abutment member there is arranged a transvesely extending beam 27 carrying vertical rods 26 passed through a guide 29 and having at the top abutment plates 24 with clamping pieces 25. The beam 27 may by means of working cylinders 28 be displaced upwards between the bands 5 against the abutment member 23. As indicated in Fig. 2 the apparatus also comprises a surround 30.

The apparatus operates in the following manner. A piece of meat 1 is placed on the conveyor belt, as shown in dot-and-dash lines in Fig. 2, and is advanced below the abutment member 23 and the scraping rods 9 and 10 until the upstream end of the ribs 2 is below the scraping rods. The beam 27 is then lifted by means of the working cylinders 28 and the clamping pieces 25 are thereby moved up towards the meat through the gaps between the bands 5 and clamp the piece of meat firmly against the abutment member 23. At the same time the beam 15 is lifted by means of the working cylinders 18 so that the rollers 17 abut on the underside of the piece of meat and press the ribs 2 up towards the scraping rods 9 and 10. Now, the electromotor 12 is started so that the scraping rods are moved in their longitudinal direction and the entire frame 8 is at the same time moved along the rail 20 in the direction of conveyance, thereby scraping the membrane in the longitudinal direction of the bone. Upon reaching the free bone end 3 the beams 27 and 15 are being lowered, following which the piece of meat is passed further on by the conveyor belt whereas the frame 8 with scraping rods and supporting rollers returns to its initial position.

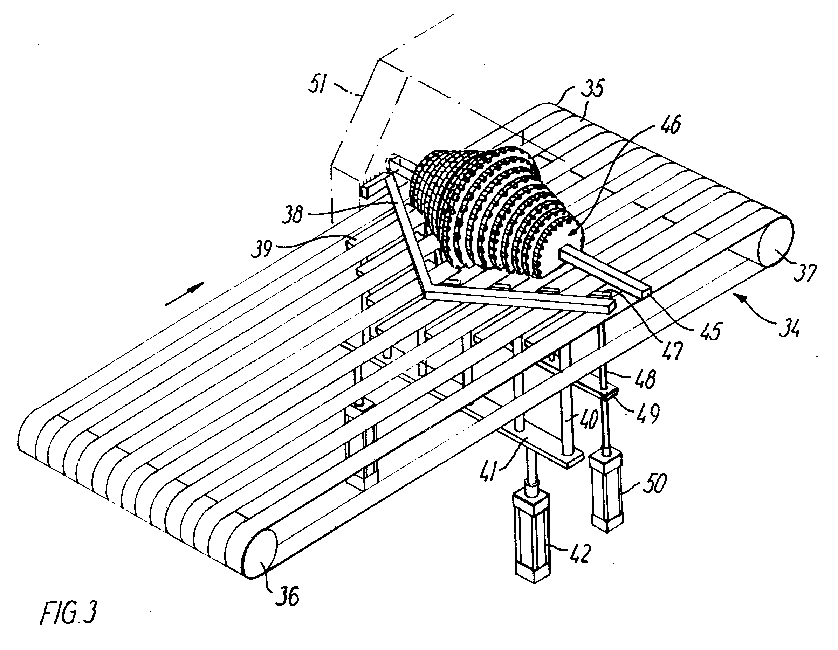

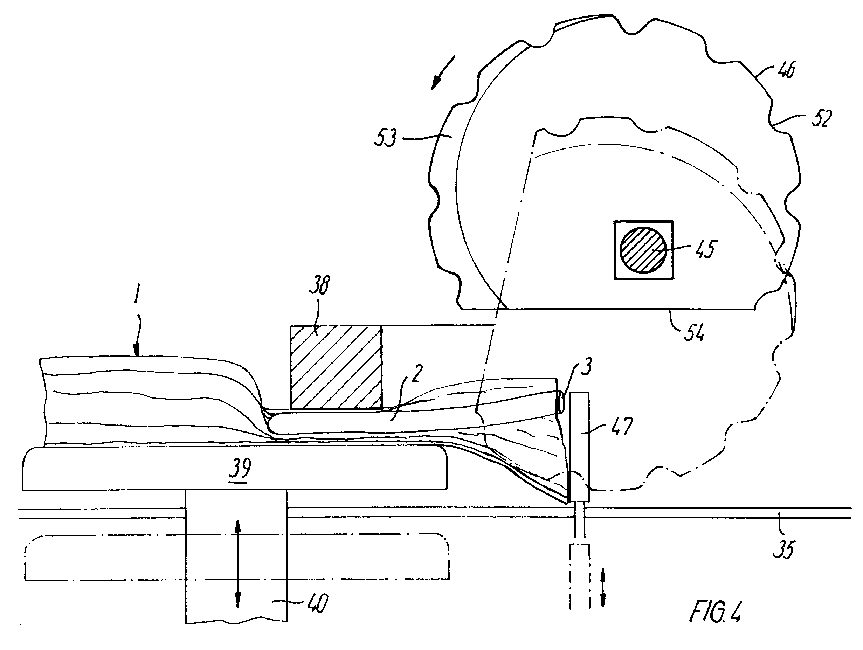

The pressing apparatus in Figs 3 and 4 consists of a conveyor belt 34 with drums 36 and 37 over which several bands 35 pass. A pivotal shaft 45 carrying a number of disc-shaped pressing members 46 made from a rigid material, e.g. nylon, is placed above the conveyor belt 34 and transversely thereto. A V-shaped retaining rail 38 is positioned upstream of the pressing members so that right hand as well as left hand sides may be processed. A beam 41 carrying rods 40 which at their upper ends have retaining plates 39 is placed beaneath the retaining rail. The beam 41 may be moved up towards the retaining rail 38 by means of working cylinders 42. Downstream of the retaining rail 38 the apparatus further has a second transverse beam 49 which carries rods 48 having at the top stops 47 located vis-à-vis the gaps between the bands 35. The stops 47 may by means of working cylinders 50 be passed from a position below the bands 35 to a position above the bands, thereby operating as stops for a piece of meat 1 advanced on the conveyor belt as illustrated in Fig. 4. As shown in Fig. 3, the components of the apparatus are enclosed in a housing 51.

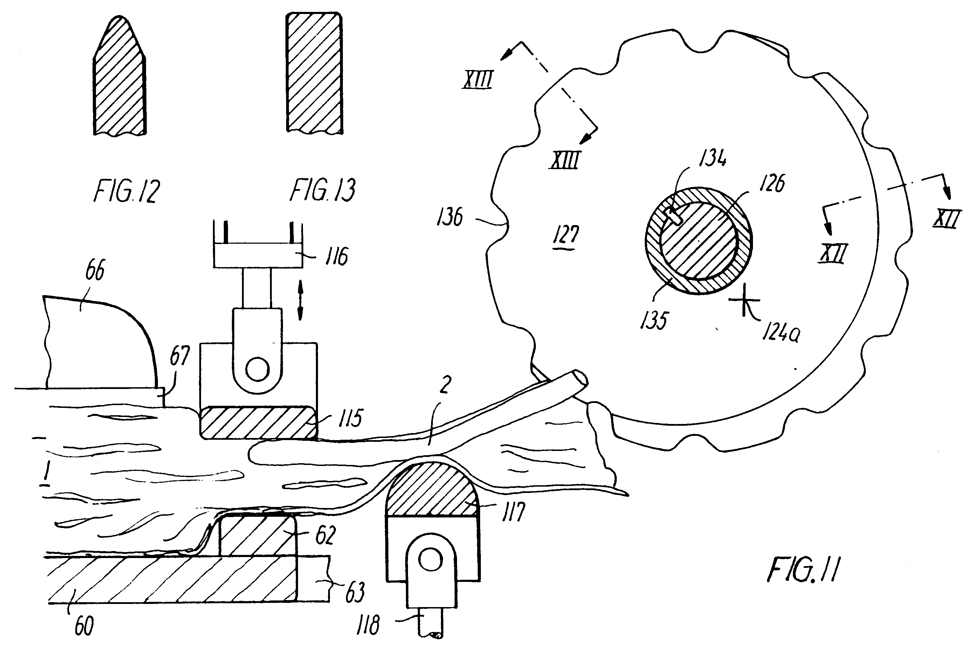

The apparatus operates as follows. A piece of meat that has been manually scraped or subjected to a treatment in the scraping apparatus is placed on the conveyor belt 34 and advanced towards the retaining rail 38 and the pressing discs 46 with the side containing the ribs facing upwards and the free ends 3 of the ribs pointing in the conveying direction. The beam 49 is at the same time lifted by means of the working cylinders 50 so that the stops 47 project upwards beyond the surface of the conveyor belt. When the piece of meat 1 strikes the stops 47 the piece of meat is stopped and is at the same time aligned so that its edge is parallel to the branches of the V-shaped retaining rail. The beam 41 is then lifted by means of the working cylinders 42 so that the retaining plates 39 are moved up through the gaps between the bands 35 and thus press the bones firmly against the retaining rail 38. The stops are lowered and the shaft 45 with the pressing discs 46 are then rotated counterclockwise (as seen in Fig. 4) from the position illustrated in solid lines. The pressing discs are eccentrically located on the shaft 45 and are mounted in such a way that they may tilt a little out of their plane. As indicated by the reference numeral 53 the edge is tapered along part of the circumference of the disc. As regards a more detailed description of the pressing discs reference is made to a discussion of an embodiment described with reference to Figs 11 to 13. During the first part of the rotation the sharpened edges of the discs engage between the ribs and due to the eccentric suspension the discs are pressed further in between the ends of the ribs, thereby pressing the meat away from the ribs 2, such as reflected by the disc illustrated in dot-and-dash lines in Fig. 4. As illustrated, part of the circumference of the discs has been removed along a chord 54 and when the discs return to their initial position the retaining plates are lowered, following which the piece of meat 1 may pass unimpededly beneath the retaining rail 38 and the flat section 54 of the discs.

In an embodiment which is not described in detail or illustrated in the drawings a scraping apparatus and a pressing apparatus of the above described type are combined so that their conveyor belts 4 and 34, respectively, lie end to end, thereby allowing a piece of meat to be carried along from the scraping apparatus directly to the pressing apparatus.

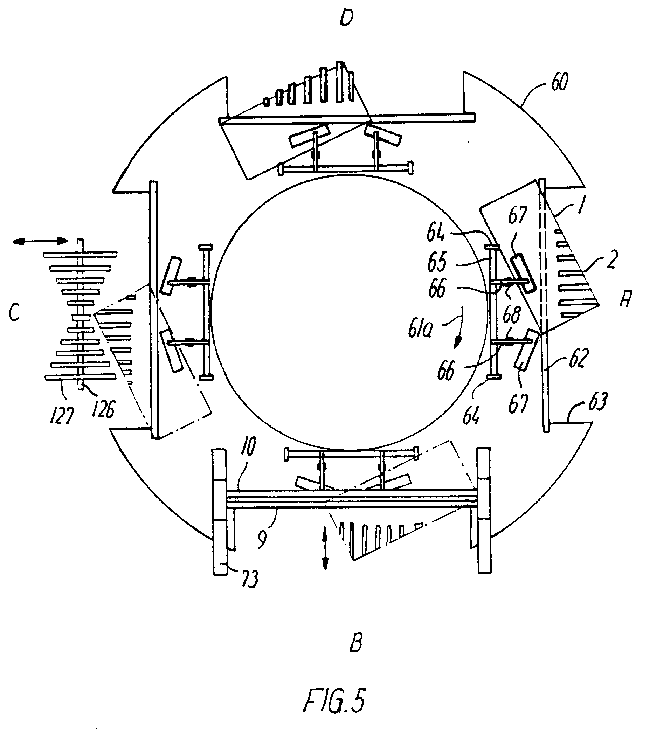

Alternative embodiments are described in Figs 5 to 13, in which the conveyor is constituted by a rotary table 60.

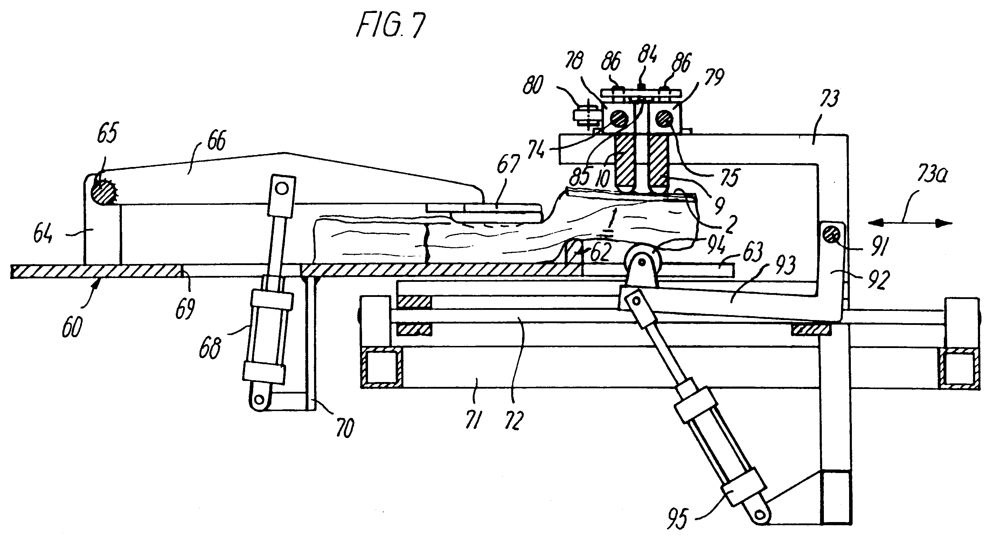

Fig. 5 illustrates a rotary table 60 rotatable in the direction of the arrow 61a so that a point of the rotary table will pass four working stations, viz. a receiving station at A, a scraping station at B, a pressing station at C and a discharging station at D. The piece of meat to be processed is placed as shown in dot-and-dash lines so that the ribs 2 are approximately perpendicular to a rail 62 delimiting a cutout 63 in the rotary table, and that the meat portion with the ribs is positioned radially beyond the rail. The piece of meat is clamped by a holder consisting of bearing brackets 64 carrying a shaft 65 with arms 66 having a pressing pad 67 at the free end. As it appears best from Fig. 7, each arm 66 is connected with a working cylinder 68 which passes through a cutout 69 in the rotary table and is secured to the underside of the table by means of a fixture. By contracting the working cylinder 68 the piece of meat 1 may be clamped to the rotary table 60.

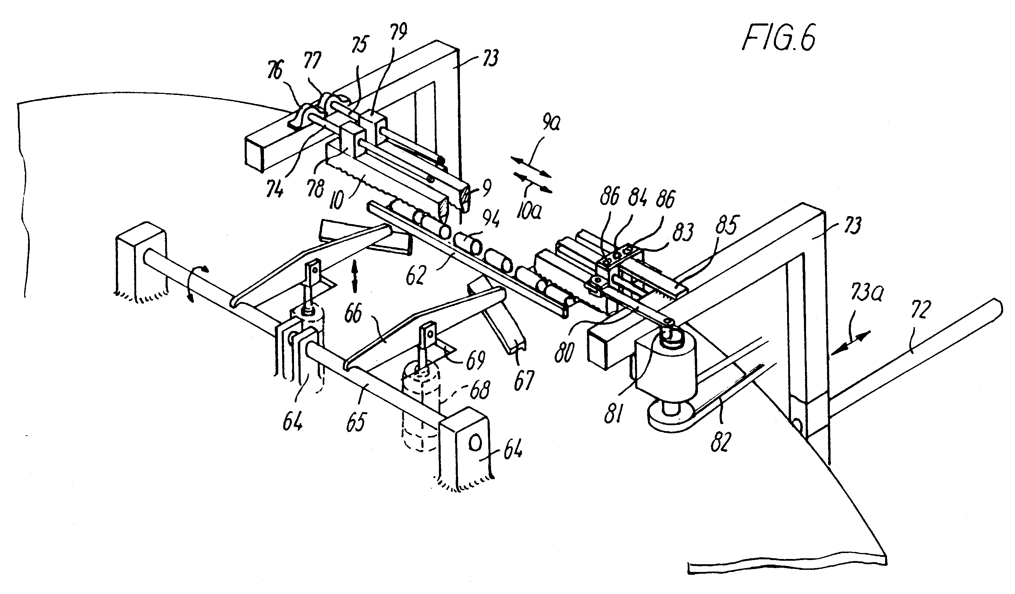

As somewhat schematically illustrated in Figs 6 and 7 the scraping station at B consists in a stationary frame 71 supporting two slide rails 72 on which a frame 73 may move radially in the direction of the arrow 73a by means, not shown. The frame 73 carries two slide rods 74 and 75 fastened at either end in brackets 76 and 77. For the sake of clearness, the brackets closest to the observer are not shown. A rod-shaped scraper 9 and 10, resp., is suspended on the slide rods 74 and 75 by means of slide blocks 78 and 79, resp.

The scraping means 10 is connected at one end through a rod 80 with an eccentric pin 81 rotated by an electromotor (not shown), via a V-belt 82. This imparts a reciprocating movement to the scraper 10 in its longitudinal direction as indicated by the arrow 10a. The scraper 9 is connected with the scraper 10 by means of a rocking lever 83 which at the middle is hinged about a pin 84 secured in an arm 85 fastened to the frame 73. The ends of the rocking lever 83 are by means of bolts 86 connected with the slide blocks 78 and 79, resp., of the scraper 10 and 9. As indicated by the arrow 9a, a reciprocating movement which is opposite to the movement of the scraper 10 being thereby imparted to the scraper 9.

The frame 73 carries several levers each of which has a substantially vertical branch 92 which is rotatably journalled at 91 about a continuous shaft resting in the frame 73 and a substantially horizontal branch which at the end carries a pressure roller 94. A working cylinder 95 is inserted between the end of the branch 53 and the frame 73. By extending the cylinder 95 the roller is passed up through the cutout 63 in the rotary table 1 so that the portion of the piece of meat 1 projecting beyond the rail 62 may be pressed up against the scrapers 10 and 9.

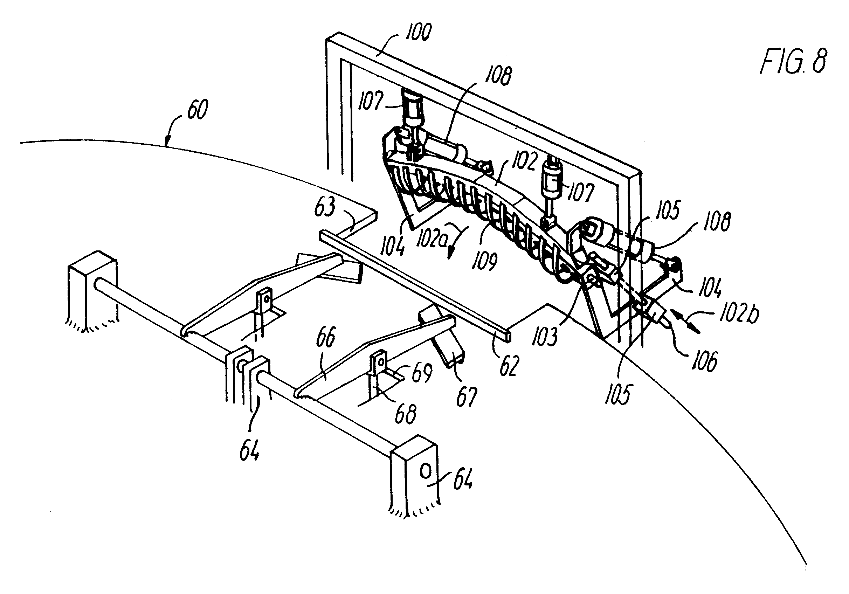

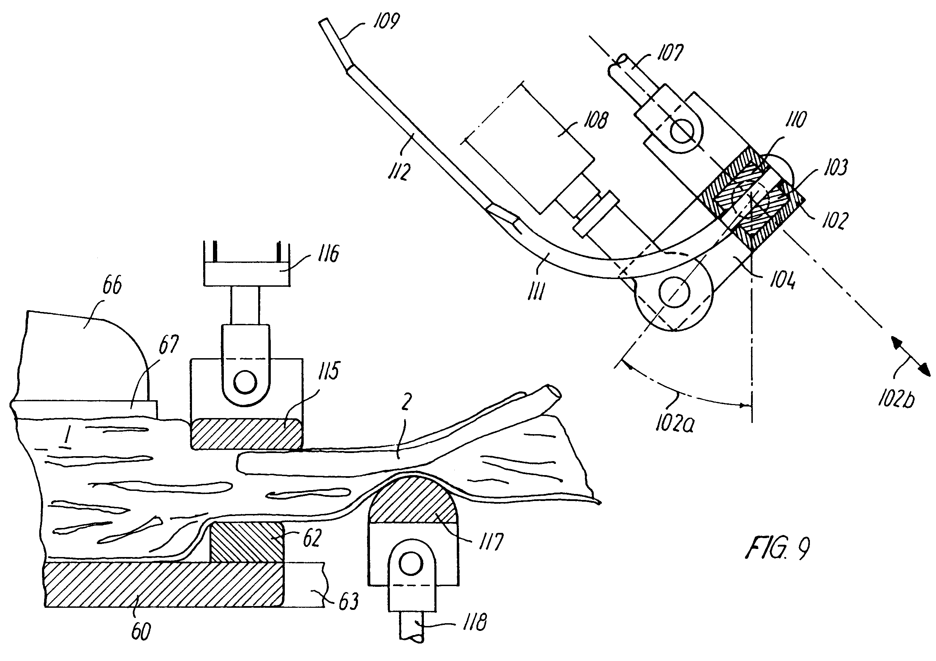

As somewhat schematically shown in Figs 8 and 9 the pressing station at C consists of a stationary frame 100 which in a manner not explained in detail carries two slide rods 106 (for the sake of clearness the slide rod remote from the observer is not shown). Two slide blocks 105 fastened to an angle section 104 slide on each slide rod 106. Between the angle sections 104 a substantially horizontal bridge is pivotally journalled about a pin 103 at one end of each angle section. The bridge may be lifted and lowered by means of two working cylinders 107 inserted between the bridge 102 and the girder of the frame 100, thereby sliding up and down along the slide rods 106. Another pair of working cylinders 108 is inserted between the bridge 102 and the other end of each angle section 104 and by means of said cylinders the bridge may be rotated about the axis formed by the pins 63.

A number of pressing fingers 109 designed to move in between the ribs 2 of the piece of meat 1 is disposed on the bridge 102. As illustrated in Fig. 5, each finger 109 is secured in a rubber block 110 on the bridge 62 so that the fingers are moderately resilient. In Fig. 9 the location of the working cylinders 107 and 108 and their connection with the bridge 102 are shown somewhat differently from Fig. 8 and in a more schematical manner for the sake of clearness.

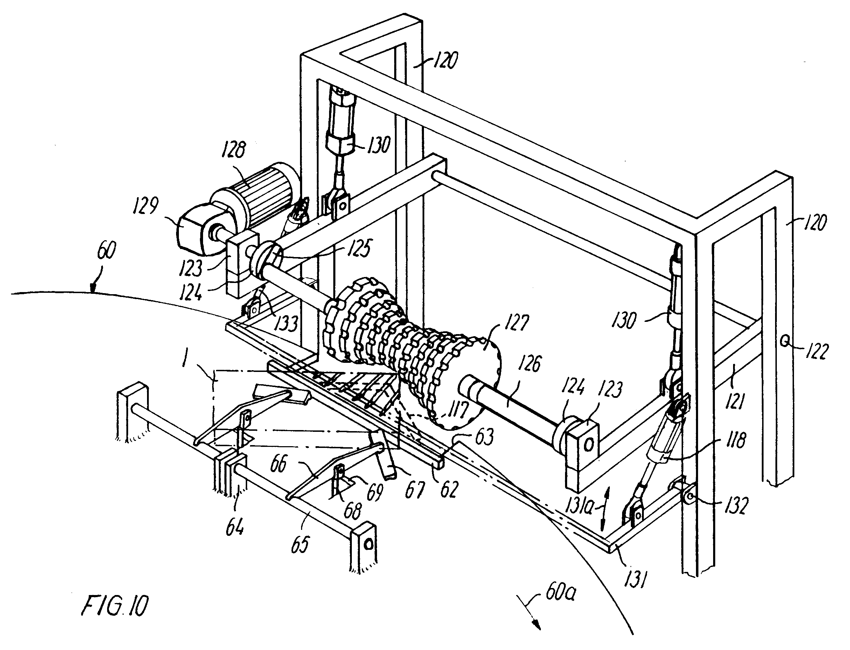

A frame positioned above the plane of the rotary table 60 and hinged to the frame 100 carries a retaining rail 115 and may by means of a pair of working cylinders 76 be swung down towards the rotary table 60, thereby pressing the retaining rail 115 down towards that end of the ribs 2 which faces the centre of the rotary wheel. A similar pivotal frame positioned below the plane of the rotary table carries a supporting rail 117 and may be swung up towards the rotary table by means of a pair of working cylinders 118, whereby the supporting rail 117 supports the ribs 2 substantially beneath their mid-points. In order to improve the clearness, the frames with rails 115 and 117 and working cylinders 116 and 118 just described have been omitted from Fig. 8 and are only schematically shown in Fig. 9, but they are both of the same structure as the frame 131 with hinge points 92, rail 117 and working cylinders 133 illustrated in Fig. 10.

A second embodiment of the pressing station at C is somewhat schematically illustrated in Figs 10 and 11. In this embodiment the pressing station consists of a stationary frame 120 in which another frame 121 is hinged at 122. The frame 121 carries two bearing brackets 123 each of which carries a disc 124 pivotally journalled in the bearing bracket, the disc having a dovetail slot 125 extending along a diameter. The slot accommodates a displaceable, adjustable block supporting the end of a shaft 126 on which a number of mutually spaced pressing discs 127 are mounted. An electric motor 128 is positioned at one bearing bracket 123 and drives the disc 124 via an angle gear 129. A pair of working cylinders 130 is inserted between the frame 121 and the framing 120 allowing the discs 127 to be lowered towards the plane of the rotary table 60. A second frame 131 is at 132 hinged to the frame 120 and may be swung up towards the plane of the rotary table 60 by means of a pair of working cylinders 118 inserted between the frame 131 and the frame 120 as indicated by the arrow 131a. The frame 131 has at the centre a supporting rail 117 for engagement on the downwards facing side of the piece of meat 1, substantially at the mid-point of the ribs 2. The station further includes a frame positioned above the plane of the rotary table, which frame in the same manner as described with reference to the first embodiment of the pressing station comprises a retaining rail 115 which by means of a pair of working cylinders 116 may be pressed down towards the end of the ribs. In respect of clearness said frame is not shown in Fig. 10 and is merely schematically shown in Fig. 11. The rail 117 and the working cylinders 118 are likewise schematically shown in Fig. 11.

Fig. 11 illustrates a pressing disc 127 attached to the shaft 126 with key and keyway in order to ensure the rotation of the disc. The cross marked with reference numeral 124a reflects the location of the axis of rotation of the discs 124. The disc 127 fits loosely on the shaft 126 so that it can wriggle a little to one or the other side so as to better enter the interspaces between the bones 2. Rubber bushings 136 serving to keep the discs at a predetermined distance from each other, however without preventing the just described wriggling movement, are mounted between the discs.

As illustrated in Fig. 12, the edge of the disc is tapered over that part of the circumference which firstly presses into the meat, whereas the part of the circumference that subsequently comes into contact with the meat has a full cross-section, except that the disc edges are rounded so that the meat is not torn or damaged. The discs 127 have cutouts 136 along the periphery. Tests have shown that such cutouts facilitate the release of the free ends of the bones. Instead of said eccentrically formed discs helical fingers may be used which are secured to a shaft, thereby enabling the fingers to press into the meat in a similar manner by rotation of the shaft.

The device operates in the following manner. The piece of meat 1 to be processed is placed as illustrated in Fig. 5 in the receiving station via-à-vis position A so that the ribs 2 are approximately perpendicular to the rail 62. The device is capable of processing right hand as well as left hand pieces. The piece of meat 1 shown in Fig. 5 is a left-hand piece. When the piece of meat is correctly placed the working cylinder 68 is activated and swings the arm 66 with the pressing pad 67 down against the piece of meat 1, thereby securely retaining it against the surface of the rotary table 60.

The rotary table is then rotated in the direction shown by the arrow 61a in Fig. 5 until the piece of meat is opposite position B, following which the rotary table is stopped. The frame 73 with scrapers is subsequently moved in over the piece of meat by means, not shown, until the scrapers lie over the ends of the ribs 2 facing the centre of the rotary table. The working cylinders 95 are then activated so that the supporting rollers 94 press the piece of meat 1 and thus the ribs up against the scrapers 10 and 9. The scrapers are then made to move longitudinally as previously explained by means of an electromotor driving the V-belt 82. At the same time the frame 73 is being moved radially outwards. As previously explained, the oppositely directed longitudinal movements of the two scrapers that are transferred to two adjacent areas of the membrane on the upper sides of the bones cause the membrane over the bones to break whereas the membrane over the meat between the bones remains undamaged because the underlying meat is merely carried along in the scraping movement without resistance. The movement of the scrapers longitudinally of the bone causes the membrane to be broken throughout the major part of the longitudinal direction of the bone. When the scrapers 10 and 9 have moved beyond the free ends 3 of the bones, their movement is stopped and the supporting rollers 94 are again lowered, following which the rotary table 60 is rotated to the station vis-à-vis position C.

The pressing station located at C is designed as illustrated in Figs 8 and 9. The rails 115 and 117 are moved by means of the associated working cylinders 116 and 118 down against the ends of the ribs facing the centre of the table and up against the central portions of the ribs, respectively. The bridge 102 is simultaneously lowered by means of the working cylinders 107 until the fingers 109 touch the piece of meat 1 and slide in between the free ends of the ribs 2. Then, the lowering of the bridge 102 is continued and the bridge is at the same time pivoted about the pins 103 by means of the working cylinders 108 so that the meat between the free ends of the ribs and the rail 117 is being pressed so much obliquely rearwards and away from the ribs that the connection between the free ends of the ribs and the membrane on the underside of the bones is broken.

The bridge 102 and the rails 115 and 117 now return to their initial positions and the rotary table rotates further on to a discharge station at D in which the working cylinders 68 are activated so that the arms 66 with the pressing pads 67 are swung up and the piece of meat may be removed for further pro-cessing, e.g. in a machine in which the now loosened ribs are being extracted.

If the pressing station at C is of the embodiment illustrated in Fig. 11, the ribs are clamped firstly between the rails 115 and 117 by means of the working cylinders 116 and 118 as explained above. The frame 121 with the discs 128 is then lowered towards the piece of meat 1 so that the discs 127 slide into the interspaces between the free ends of the ribs 2. The electric motor 128 is now started and the discs 127 carry out an eccentrically rotating movement while being further lowered by means of the working cylinders 130, said eccentrically rotating movement causing the meat between the free ends of the ribs to be pressed so much obliquely rearwards and away from the bones that the membranes on the underside of the free bone ends burst. Then, the rotating movement is stopped and the frame 121 together with the rails 115 and 117 return to their initial positions. Afterwards, the rotary table is rotated further on to the position D, as explained above.

## Claims

1. A method of loosening the bones (2) in a piece of meat (1), characterized in that two adjacent areas of the membrane of the bone offset in relation to each other in the longitudinal direction of a bone (2) are pressed towards the bone and displaced in relation to each other transversely to the bone, thereby breaking the membrane, and that the latter operation is carried out successively along part of the bone.

2. A method according to claim 1, characterized in that both of the adjacent areas offset in relation to the longitudinal direction of the bone (2) are displaced in relation to the bone in the transverse direction of the bone.

3. A method according to claims 1 or 2, characterized in that the operation is carried out along substantially the entire bone (2), preferably in the direction towards a free bone end (3).

4. A method of loosening the ribs (2) in a piece of meat (1), characterized in that the piece of meat (1) is being clamped and the bones (2) supported at their membrane side, while being supported at the opposite side via the meat in such a manner that the bone portion of the piece of meat is by and large kept in the same plane as the meat portion beyond the bones, while the meat in the area at the free ends (3) of the bones at the same time is pressed away from the bones in the direction in towards the piece of meat and away from the membrane side of the bones.

5. An apparatus for loosening the ribs (2) in a piece of meat (1), comprising scraping means (9, 10) disposed above the plane of the piece of meat for scraping the membrane side of the bones in the longitudinal direction of the bones, a holder (23 to 27) for the piece of meat and a conveyor (4) for advancing the piece of meat, characterized in that the scraping means comprise two mutually parallel, elongated scraping members (9, 10) where at least one scraping member is displaceable in its longitudinal direction and displaceable in relation to the second scraping member (10), that a support (15 to 17) is provided in connection with the scraping members, the scraping members and the support being movable in the direction towards each other, and that the holder comprises an abutment (23) and a clamping means (24 to 27) movable in relation thereto.

6. An apparatus according to claim 5, characterized in that both of the scraping members (9, 10) are displaceable in their longitudinal direction.

7. An apparatus according to claim 5 or 6, characterized in that the scraping members are rods (9, 10) with scraping faces provided with incisions (11).

8. An apparatus according to claims 5 to 7, characterized in that the conveyor is a conveyor belt (4) composed of a number of mutually separated bands (2), that the support comprises a movable beam (15) carrying several rods (16) and extending transversely to the conveyor belt, each rod carrying a support roller (17) at the free end, and that the clamping member comprises a second movable beam (27) extending transversely to the conveyor belt and carrying several rods (26) each of which at the free end is provided with an abutment plate (24).

9. An apparatus for loosening the ribs (2) in a piece of meat (1), characterized in that it comprises a conveyor (4) for advancing the piece of meat (1), a holder for the piece of meat having a member (38) with a substantially plane surface for abutment against the membrane side of the bone, several supporting means (39) for abutment on the meat side opposite the bones, and several pressing members rotatable about a common axis.

10. An apparatus according to claim 9, characterized in that the conveyor is a conveyor belt (34) composed of several mutually separated, parallel bands (35), that the member for abutment on the membrane side of the bones (2) is a fixed rail (38), that each supporting member comprises a surface (39) located in a gap between two bands and supported at the end of a rod (40) whose other end is secured on a beam (41) extending transversely to the conveyor belt and movable against it, and that the pressing members are substantially circular discs (46) disposed on a common rotatable shaft (45).

11. An apparatus according to claim 10, characterized in that the discs (46) are mounted eccentrically on the common shaft (45).

12. A combined device for loosening the ribs (2) in a piece of meat (1), comprising scraping means (9, 10) positioned above the plane of the piece of meat for scraping the membrane side of the bones in the longitudinal direction of the bones, a holder (23 to 27) for the piece of meat and a conveyor (4) for advancing the piece of meat, characterized in that the scraping means comprise two mutually parallel, elongated scraping members (9, 10) where at least one scraping member (9) is displaceable in its longitudinal direction and is displaceable in relation to the second scraping member (10), that a support (15 to 17) is provided in connection with the scraping members, where the scraping members and the support are movable in the direction towards each other, that the holder includes an abutment (23) and a clamping means (24 to 27) movable in relation thereto, and that there is a second conveyor (34) for advancing the piece of meat (1), a holder for the piece of meat comprising a means (38) with a substantially plane surface for abutment on the membrane side of the bones, a number of supporting means (39) for abutment on the meat side opposite the bones, and several pressing members (46) rotatable about a common axis.

13. A combined device according to claim 12, characterized in that the first conveyor (4) and the second conveyor (34) are placed end to end, and that the scraping members (9, 10) are positioned upstream of the pressing members (46).

14. A combined device according to claim 12, characterized in that it comprises a rotary table (60) supporting the holder (64 to 68) for clamping the piece of meat (1), a scraping station with a radially displaceable frame (73) supporting two mutually parallel scraping rods (9, 10), where at least one scraping rod (9) is displaceable in its longitudinal direction and displaceable in relation to the second scraping rod (10), that the frame of the scraping station carries several supporting rollers (94) intended to move from a passive position beneath the plane of the rotary table (60) to an active position above said plane, and a pressing station comprising a holder in the shape of a retaining rail (115) movable towards the upper side of the rotary table and a supporting member formed as a rail (117) intended to be displaced from a passive position beneath the plane of the rotary table to an active position above the plane of the rotary table, the pressing members being substantially circular discs (127) mounted on a common shaft (126) which is adjustably fastened at either end in a diametrical slot (124) in a disc (125) rotatably journalled in a frame (121) that is pivotally supported in a frame (120), and that said frame (121) carries a motor (128, 129) for rotation of one of the discs provided with a diametrically extending slot.
